# EUROPÄISCHE PATENTSCHRIFT

(11) **EP 2 758 357 B1**
(45) Veröffentlichungstag und Bekanntmachung des Hinweises auf die Patenterteilung: **27.03.2019**
(21) Anmeldenummer: 12756702.2
(22) Anmeldetag: 05.09.2012
(51) Int. Cl.: C04B 35/56, C04B 35/626, C04B 35/634, C04B 35/645, B22F 1/00, B22F 9/04, C22C 29/08, C01B 32/949

(54) **VERFAHREN ZUR HERSTELLUNG VON KUGELFÖRMIGEM HARTSTOFFPULVER**
METHOD FOR PRODUCING SPHERICAL HARD MATERIAL POWDER
PROCÉDÉ DE FABRICATION D'UNE POUDRE SPHERIQUE DE SUBSTANCE DURE

(30) Priorität: 21.09.2011 DE 102011113854
(43) Veröffentlichungstag der Anmeldung: 30.07.2014
(73) Patentinhaber: Durum Verschleißschutz GmbH, 47877 Willich (DE)
(72) Erfinder: WIEGAND, Artur, 36433 Bad Salzungen (DE); KNAUF, Peter, 40629 Düsseldorf (DE)
(74) Vertreter: Bendel, Christian
(86) Internationale Anmeldenummer: PCT/EP2012/067278
(87) Internationale Veröffentlichungsnummer: WO 2013/041373

(56) Entgegenhaltungen:
- EP-A1- 1 518 622
- DE-A1- 4 201 615
- DE-A1- 19 602 525
- DE-A1- 19 945 318
- DE-T2- 60 103 784
- JP-A- 7 257 925
- JP-A- H05 246 721
- JP-A- 2001 303 106
- JP-A- 2003 128 461
- JP-A- 2005 279 559
- JP-A- 2006 143 551
- US-A- 5 730 793
- BAIK K H ET AL: "Nanostructured WC-Co coatings from different feedstock powders", MATERIALS SCIENCE FORUM, TRANS TECH PUBLICATIONS LTD- SWITZERLAND, CH, Bd. 449-452, 1. Januar 2004 (2004-01-01), Seiten 1293-1296, XP008157694, ISSN: 0255-5476
- TREMBLAY S ET AL: "FABRICATION OF DENSE TUNGSTEN-COBALT SPHEROIDAL PARTICLES BY AGGLOMERATION AND SINTERING", INTERNATIONAL JOURNAL OF POWDER METALLURGY, A P M I INTERNATIONAL, US, Bd. 21, Nr. 4, 1. Januar 1985 (1985-01-01) , Seiten 261-268, XP008157696, ISSN: 0361-3488
- A W Patek ET AL: "An application of jet grinding to fluidised bed granulation", Powder Technology, 1 January 1991 (1991-01-01), pages 305-310, XP055281627, Retrieved from the Internet: URL:http://ac.els-cdn.com/003259109180194N /1-s2.0-003259109180194N-main.pdf?_tid=a37 b6cdc-348f-11e6-9be4-00000aab0f02&acdnat=1 466170401_c420de34f7a2e27af2e969309d1f4afa
- MAROGLOU A ET AL: "FLUIDIZED BED GRANULATION TECHNOLOGY AND ITS APPLICATION TO TUNGSTEN CARBIDE", POWDER METALLURGY, MANEY PUBLISHING, LONDON, GB, vol. 29, no. 4, 1 January 1986 (1986-01-01), pages 291-295, XP008180639, ISSN: 0032-5899, DOI: 10.1179/POM.1986.29.4.291

## Beschreibung

Die vorliegende Erfindung betrifft ein Herstellungsverfahren für ein Hartstoffpulver gemäß den Merkmalen des Anspruchs 1.

Es ist bekannt, den Hartstoff Wolframkarbid (WC) im Wege bestimmter Herstellungsverfahren als nanoskaliges WC bereit zu stellen. Beispiele für solche Stoffe finden sich als Produkte des Unternehmens H.C. Starck GmbH, Goslar (www.hcstarck.com), zum Beispiel unter Produktbezeichnungen wie WC DN 2-5, WC DN 3-0, WC DN 3-5, WC DN 4-0. Folgende übliche Terminologie wird dabei für die Bezeichnung von Größenordnungen zu Grunde gelegt:

| Korngröße µm | Bezeichnung | |
|---|---|---|
| | deutsch | englisch |
| < 0,2 | nano | nano |
| 0,2 - 0,5 | ultrafein | ultrafine |
| 0,5 - 0,8 | feinst | submicron |
| 0,8 - 1,3 | fein | fine |

Es hat ferner Untersuchungen aus der Praxis der Verschleißschutzschichten gegeben, feinkörniges bis nanoskaliges WC zu Agglomeraten zusammenzufügen und diese Agglomerate zu sintern. Hierdurch werden gezielt Körner aus dem Hartstoff WC bereitgestellt, die eine Substruktur aus gesinterten Kristalliten des Hartstoffes aufweisen. Diese Körner haben eine unkontrollierte Form, die regelmäßig als flach, kantig, unregelmäßig und/oder mit Vorsprüngen versehen ausfällt.

JP-A-2005 279559 beschreibt die Herstellung von Wolframkarbidkugeln zur Verwendung in einer Mühle. Dabei wird eine Sprühtrocknung einer Suspension durchgeführt.

JP-A-2003 128461 beschreibt die Herstellung von gesinterten Zirkoniakugeln zur Verwendung in einer Mühle.

JP-A-7 257 925 beschreibt die Herstellung von Zirkoniakugeln zur Verwendung in einer Mühle.

US-A-5,730,793 beschreibt die Verwendung von gesinterten Zirkoniakugeln, wobei die Herstellung der Zirkoniakugeln auf eine Verfahren durch Agglomeration in einer Suspension während eines Rührvorgangs Bezug nimmt.

BAIK K H ET AL: "Nanostructured WC-Co coatings from different feedstock powders", MATERIALS SCIENCE FORUM, TRANS TECH PUBLICATIONS LTD SWITZERLAND, CH, Bd. 449-452, 1. Januar 2004 (2004-01-01), Seiten 1293-1296, ISSN: 0255-5476 beschreibt einen testweisen thermischen Auftrag von kommerziell erworbenem, nanostrukturiertem WC-Pulver mit annähernd kugelförmigen Partikeln im Bereich von 10-50 µm Durchmesser.

TREMBLAY S ET AL: "FABRICATION OF DENSE TUNGSTENCOBALT SPHEROIDAL PARTICLES BY AGGLOMERATION AND SINTERING", INTERNATIONAL JOURNAL OF POWDER METALLURGY, APMI INTERNATIONAL, US, Bd. 21, Nr. 4, 1. Januar 1985 (1985-01-01), Seiten 261-268, ISSN: 0361-3488 beschreibt Versuche zur Agglomeration von WC-Körnern zu annähernd kugelförmigen Agglomeraten mittels eines drehenden Zylinders. Die Körner haben eine mittlere Größe von mehr als 1 µm. Die Agglomerate müssen nach einer Vorsinterung unter hohem Druck gepresst werden, um vor einer zweiten Sinterung eine ausreichende Dichte zu erhalten.

JP-A-H05 246721 beschreibt die Herstellung von Agglomeraten aus Zirkoniapulver, wobei die Ausgangspartikel eine Größe von mehr als 2 µm aufweisen und Methoden der Sprühtrocknung verwendet werden.

EP-A1-1 518 622 beschreibt ein Verfahren zur Herstellung von Agglomeraten aus Wolframkarbid durch Aufschlämmen von Partikeln mit einer Flüssigkeit zu einem Schlicker und anschließendes Sprühtrocknen.

DE-A1-199 45 318 beschreibt die Herstellung von sphäroidisiertem WC-Hartstoffpulver, indem aus einer Schmelze erstarrtes WC gemahlen, gesiebt und durch ein Plasma erhitzt wird.

DE-A1-42 01 615 beschreibt die Herstellung von Keramikkugeln mittels Wirbelschichtgranulation in zwei Schritten, wobei Ausgangspartikel zwischen 25% und 50% des Durchmessers der Keramikkugeln aufweisen und die Ausgangspartikel einen Durchmesser im Bereichvon 100 µm bis 250 µm aufweisen.

JP-A-2006 143551 beschreibt die Granulation von Zirkoniapulver mittels Walzengranulation.

DE-A1-196 02 525 beschreibt die Herstellung von Kugeln aus Aluminiumoxid zur Verwendung als Mahlkörper, wobei die Kugeln aus Aluminiumoxid mittels einer Wirbelschicht-Granulation vorgeformt und dann gesintert werden.

DE-T2-601 03 784 beschreibt die Herstellung von agglomerierten WC-Partikeln aus einem Pulver einer mittleren Teilchengröße von 11 µm mittels Aufbereitung des Pulvers zu einem Schicker und anschießender Sprühtrocknung.

JP-A-2001 303106 beschreibt die Herstellung von WC-Partikeln durch Wirbelschichtgranulation und anschließende Sinterung. Die granulierten Partikel haben einen Größenbereich von 100 µm bis 300 µm und das Ausgangspulver hat eine Partikelgröße von 10 µm oder weniger.

A W Patek ET AL: "An application of jet grinding to fluidised bed granulation", Powder Technology, 1. Januar 1991 (1991-01-01), Seiten 305-310, beschreibt ein Verfahren zur Verbesserung der Größenverteilung von granulierten WC-Partikeln durch Einwirken eines Hochgeschwindigkeits-Luftstrahls in einem unteren Bereich eines Wirbelschicht-Granuliergerätes. Die Ausgangspartikel aus WC haben eine Größe zwischen 2 µm und 30 µm, wobei eine Mehrzahl der Partikel eine Größe von weniger als 5 µm aufweist.

MAROGLOU A ET AL: "FLUIDIZED BED GRANULATION TECHNOLOGY AND ITS APPLICATION TO TUNGSTEN CARBIDE", POWDER METALLURGY, MANEY PUBLISHING, LONDON, GB, Bd. 29, Nr. 4, 1. Januar 1986 (1986-01-01), Seiten 291-295, ISSN: 0032-5899, beschreibt die Wirbelschichtgranulierung einer Fraktion von WC-Körnern der Größe zwischen 1 µm und 5 µm. Die granulierten Partikel sind dazu bestimmt, zunächst in einer Form gepresst und dann gesintert zu werden.
Der Erfindung liegt die Aufgabe zugrunde, ein Herstellungsverfahren für ein verschleißfestes Hartstoffpulver anzugeben.

Diese Aufgabe wird durch ein Verfahren mit den Merkmalen des Anspruchs 1 gelöst.

Ein durch das erfindungsgemäße Verfahren herstellbares Hartstoffpulver umfasst zumindest eine Fraktion von Körnern, wobei die Körner Kristallite aus einem Hartstoff umfassen, und wobei die Kristallite in einem der Körner jeweils miteinander versintert sind, wobei für eine Mehrzahl der Körner ein mittlerer Durchmesser der Körner wenigstens dem Fünffachen einer mittleren Sehnenlänge der Kristallite des jeweiligen Korns beträgt, wobei die Körner im Wesentlichen kugelförmig ausgebildet sind. Durch die zumindest annähernde Kugelform der Körner wird eine Verbesserung der Verschleißfestigkeit erzielt.

Im Sinne der vorliegenden Erfindung wird unter einem Kristallit jede ausreichend stabile Einheit verstanden, aus der durch Versinterung mit anderen Kristalliten ein polykristallines Pulverkorn herstellbar ist. Grundsätzlich können die Kristallite daher einkristallin, polykristallin oder auch amorph sein, wobei ihre innere Kristallstruktur im Zuge der Versinterung je nach Einzelfall unverändert bleibt oder sich verändern kann.

Als mittlere Sehnenlänge eines Kristallits wird die übliche Definition einer Kristallitgröße verstanden, nach der ein Raster von Linien über zum Beispiel ein Schliffbild der Kristallite gelegt wird, wonach ein Mittelwert der Längen der die Kristallite schneidenden Sehnen bestimmt wird. Der Durchmesser eines Korns ist als Linie durch seinen Schwerpunkt zu verstehen. Die Angabe, dass der Durchmesser eines Korns wenigstens dem fünffachen der mittleren Sehnenlänge der Kristallite des Korns entspricht, bringt zum Ausdruck, dass die Körner überwiegend aus einer großen Anzahl von Kristalliten bestehen, insbesondere mehr als 100 Kristallite je Korn. Dies ermöglicht unter anderem eine gute Ausbildung einer Kugelform der Körner.

Typische Größen der Körner eines durch ein erfindungsgemäßes Verfahren hergestellten Hartstoffpulvers liegen zwischen einem Mikrometer und einem Millimeter. Bevorzugte Korngrößen für viele Anwendungen von Verschleißschutzschichten liegen zwischen 5 µm und 500 µm, besonders bevorzugt zwischen 10 µm und 200 µm.

Sämtliche der vorliegend gemachten Prozentangaben eines stofflichen Anteils sind, falls nicht ausdrücklich anders angegeben, als MassenProzent zu verstehen. Unter einem Hartstoff im Sinne der Erfindung ist jeder Stoff mit einer Härte von > 1000 HV (Härte nach Vickers) zu verstehen. Beispiele hierfür sind Metallkarbide, Metallnitride, Metall-Karbonitride oder auch einige Oxide. Insbesondere ist unter einem Hartstoff ein entsprechend hartes Karbid, Nitrid oder Karbonitrid eines Elements aus der 4., 5. oder 6. Nebengruppe des Periodensystems zu verstehen. Auch Gemische verschiedener Hartstoffe sind Hartstoffe im Sinne der Erfindung.

Bei einer vorteilhaften Ausführungsform der Erfindung beträgt für zumindest ein Drittel der Körner, bevorzugt für zumindest zwei Drittel der Körner, ein Verhältnis eines maximalen Durchmessers des Korns zu einem minimalen Durchmesser des Korns nicht mehr als 1,5, bevorzugt nicht mehr als 1,2. Unter einem Durchmesser des Korns ist dabei eine beliebige Linie durch den Schwerpunkt des Korns zu verstehen.

Im Allgemeinen ist es vorteilhaft vorgesehen, dass eine mittlere Dichte der Körner wenigstens 90%, insbesondere wenigstens 95%, einer theoretischen Dichte beträgt. Unter der theoretischen Dichte ist dabei eine theoretisch maximal erzielbare Dichte zu verstehen, bei der keine technisch bedingten, komprimierbaren Hohlräume mehr in dem Korn vorhanden sind. Die hohe Annäherung an die theoretische Dichte ist für eine gute mechanische Stabilität der Körner wichtig.

Erfindungsgemäß beträgt die mittlere Sehnenlänge der miteinander versinterten Kristallite maximal 1 µm, bevorzugt maximal 0,5 µm und besonders bevorzugt nicht mehr als 0,2 µm. Es zeigt sich allgemein, dass die erzielbare Härte der Körner mit abnehmender Kristallitgröße zunimmt. Besonders bevorzugt sind dabei Kristallite im nanoskaligen Bereich, die eine besonders hohe Aktivität bei einer Versinterung im Sinne von Diffusionsvorgängen und Platzwechselvorgängen zeigen.

Gemäß der Erfindung ist der Hartstoff als ein Wolframkarbid, bevorzugt WC, ausgebildet. WC ist ein weit verbreiter Hartstoff, der insbesondere in Form von nanoskaligen Kristalliten am Markt erhältlich ist.

Bei einer möglichen Weiterbildung der Erfindung ist es vorgesehen, dass in den Körnern zwischen den Kristalliten eine Matrix angeordnet ist, insbesondere in einem Massenanteil von weniger als 15%. Eine solche Matrix kann zum Beispiel Kobalt sein, wenn die Kristallite aus WC bestehen. Ein System aus WC in einer Kobaltmatrix wird oft als "Hartmetall" bezeichnet. Dabei ist für die vorliegende Erfindung zu berücksichtigen, dass das Hartstoffpulver auch aus freien Körnern bestehen kann, wobei die Matrix innerhalb der Körner zwischen den Kristalliten angeordnet ist. Bei einer weiteren Verarbeitung des Hartstoffpulvers können die Körner in eine Matrix eingebettet werden, wobei diese Matrix je nach Anforderungen mit einer Matrix innerhalb der Körner identisch sein oder auch von dieser verschieden sein kann. Grundsätzlich können die Körner für geeignete Systeme, zum Beispiel WC, auch ohne jede Matrix hergestellt werden.
Falls eine Matrix vorhanden ist, liegt bei vielen bevorzugten Ausführungsformen der Massenanteil der Matrix in den Körnern in einem Bereich von wenigstens 5%, besonders bevorzugt im Bereich von 5% bis 12%. Dies kann zu einem signifikanten Auffüllen von Hohlräumen zwischen den Kristalliten führen, wobei die Kristallite dennoch im Wesentlichen unmittelbar aneinander grenzen. Im Besonderen gelten diese bevorzugten Matrixanteile für Systeme mit WC als Material der Hartstoffkristallite. Die Matrix kann dabei zum Beispiel, aber nicht notwendig, aus Kobalt bestehen.
Bei anderen erfindungsgemäßen Systemen kann es auch vorgesehen sein, dass eine gegebenenfalls vorhandene Matrix vorrangig einer Benetzung der Kristallite zur Verbesserung des Sintervorgangs dient. In solchen Fällen kann es vorgesehen sein, dass das Matrixmaterial im gesinterten Korn einen geringen Volumentanteil aufweist, insbesondere nicht mehr als 5 % Volumenanteil.

Die Herstellung einer Vorrichtung wird auch erwähnt, bevorzugt ein Werkzeug, zumindest teilweise bestehend aus einem erfindungsgemäß hergestellten Hartstoffpulver, wobei die Körner des Hartstoffpulvers in eine Matrix eingebunden sind. Ein solches System aus Harstoffpulver in einer Matrix kann als verschleißfeste Beschichtung vorliegen, zum Beispiel auf Schmiedebacken, Schneidkanten, Bohr- oder Fräseinsätzen oder sonstigen Werkzeugen. Je nach Anforderungen kann aber auch ein überwiegender Teil oder die gesamte Vorrichtung aus der Matrix mit dem eingebetteten Hartstoffpulver bestehen. Die Herstellung einer solchen Vorrichtung kann auf beliebigem bekannten Weg erfolgen, zum Beispiel mittels thermischen Auftragsverfahren.

Durch die Trocknung der im Raum befindlichen Tröpfchen wird eine günstige Agglomeration erreicht, wobei ein nachfolgendes Sintern die Form der Agglomerate überwiegend aufrecht erhält. Dabei ist zu berücksichtigen, dass der Erhalt der Form nicht notwendig einen Erhalt der Größe bedeutet, da bei einem Sintern regelmäßig eine gewisse Schrumpfung stattfindet.

Unter einem Zerteilen der Suspension ist jede beliebige Aufteilung in freie Tröpfchen zu verstehen, wobei überwiegend zunächst ein oder mehrere der Kristallite in den Tröpfchen angeordnet sind.

Eine solche Zerteilung kann bevorzugt, aber nicht notwendig mittels Verdüsung der Suspension in einer Düse erfolgen. Durch Wahl der Parameter von Düsengröße, Düsenform, Druckdifferenz u.a. kann eine Tröpfchengröße eingestellt bzw. nachgefahren werden.

Eine bevorzugte Tröpfchengröße liegt unterhalb von 100 µm, insbesondere im Bereich 1 µm bis 100 µm.

Eine bevorzugte Zerteilung der Suspension erfolgt mittels einer Mehrstoffdüse. Dabei wird die unter definierten Bedingungen von Druck, Volumenstrom und/oder Temperatur zugeführte Suspension mittels zumindest eines weiteren Stoffes, insbesondere einem Gas wie Druckluft, Stickstoff o.ä., zerstäubt.

Um die Form der Agglomerate vor einem Sintern nicht zu zerstören, ist es besonders bevorzugt vorgesehen, dass zwischen Schritt c. und Schritt d. keine unmäßige bzw. die Agglomerate deformierende mechanische Beanspruchung der Agglomerate, z.B. durch Pressen oder Mahlen, erfolgt. Allenfalls kann eine kontrollierte Auflockerung der gesammelten Agglomerate erfolgen, bei der die mechanisch noch wenig stabile Verbindung der Kristallite im Agglomerat nicht zerstört wird.

Bei einer bevorzugten Weiterbildung des Verfahrens ist es vorgesehen, dass die Agglomerate im Wesentlichen kugelförmig sind, wobei bevorzugt ein Verhältnis eines maximalen Durchmessers des Agglomerats zu einem minimalen Durchmesser des Agglomerats nicht mehr als 1,5, insbesondere nicht mehr als 1,2, beträgt. Es versteht sich, dass die Kugelform sich bevorzugt ausbildet, wenn die Tröpfchen frei im Raum schweben. Es kann aber auch durch gezielte Einstellung von Parametern, zum Beispiel einer Strömungsgeschwindigkeit der Tröpfchen, vorgesehen sein, dass sich anderen Formen wie z.B. Tropfen, Ellipsoide u.ä. ausbilden.

Besonders vorteilhaft enthält die Suspension einen Binder, um die mechanische Festigkeit der Agglomerate vor dem Sintern zu unterstützen und/oder die Bildung der Agglomerate im Raum zu verbessern. Es kann sich bevorzugt um einen Binder auf organischer Basis handeln. Ein solcher Binder kann zum Beispiel im Zuge des Sinterns entfernt werden. Um das System nicht zu stören, zum Beispiel durch einen übermäßigen Eintrag an Kohlenstoff, liegt der Binder bevorzugt in einem Massenanteil von nicht mehr als etwa 10% vor. Dies bezieht sich insbesondere auf die Suspension, der der Binder in zweckmäßiger Ausgestaltung beigefügt wird. Es ist in alternativen Ausführungsformen aber auch denkbar, dass der Binder dem Raum mit den Tröpfchen separat zugeführt wird, zum Beispiel in Aerosol-, Dampf- oder Gasform.

Die Erfindung umfasst den Schritt: Kontrolliertes, mehrfaches Anlagern eines oder mehrerer Kristallite aus einem ersten Tröpfchen an ein Agglomerat. Bevorzugt, aber nicht notwendig ist dabei ein mittlerer Durchmesser der gesinterten Agglomerate größer ist, bevorzugt wenigstens dreimal größer, als ein mittlerer Durchmesser der Tröpfchen. Auf diese Weise lassen sich allgemein besonders dicht gepackte Agglomerate mit geringem Ausschuss erzeugen. Zudem wird die Größe der erzeugten Agglomerate gut kontrollierbar.
Erfindungsgemäß ist es vorgesehen, dass Schritt c. eine Wirbelschichtgranulierung des Hartstoffs umfasst. Durch eine Wirbelschichtgranulierung kann eine Bildung der Agglomerate realisiert werden. Dabei befinden sich die Tröpfchen und abgetrockneten Kristallite in einem kontrollierten Gasstrom besonders lange in der Schwebe und können andere Tröpfchen und/oder Kristallite anlagern. Die Betriebsparameter lassen sich dabei kontrolliert so optimieren, dass die Agglomerate ab dem Erreichen einer gewissen Größe aus dem Raum entnommen werden, zum Beispiel durch Ausfallen.
Eine in Hinsicht auf Kosten, Arbeitsplatzsicherheit und Umwelt besonders optimale Variante des erfindungsgemäßen Verfahrens liegt vor, wenn die Flüssigkeit der Suspension Wasser ist. Bevorzugt kann es sich um entgastes Wasser handeln, so dass möglichst wenig freier Sauerstoff vorliegt. Es hat sich überraschend gezeigt, dass ein Harstoffpulver bzw. ein durch das erfindungsgemäße Verfahren erzeugtes Hartstoffpulver bezüglich des Kohlenstoffhaushaltes recht unkritisch ist. Dies gilt insbesondere für den Fall des WC. Somit kann auf einen Ausgleich des Kohlenstoffs verzichtet werden, der eventuell durch Oxidation aufgrund des eingebrachten Wassers verloren geht.

Allgemein vorteilhaft umfasst Schritt a. des Verfahrens ein Mahlen einer Ausgangsfraktion des Hartstoffes, um eine ausreichend feine Verteilung von freien Kristalliten in der Suspension zu ermöglichen. Besonders bevorzugt kann das Mahlen dabei in einer Kolloidmühle erfolgen. Solche Kolloidmühlen werden auch als Rotor-Stator-Mühlen bezeichnet und umfassen zum Beispiel einen kegelförmigen Rotor, der mit einem definierten Spaltabstand in einem hohlkegelförmigen Stator dreht, wobei das Mahlgut bzw. die Suspension entsprechende Beschleunigungen und Einwirkungen in dem Spalt erfährt. Grundsätzlich ist aber jede geeignete Methode zur Aufbereitung der Suspension von der Erfindung umfasst, zum Beispiel auch ein Aufbereiten mit Attritoren, Kugelmühlen etc.. Bei dem Mahlen der Ausgangsfraktion muss keine Zerkleinerung der Hartstoffkristallite erfolgen, sondern oft handelt es sich nur um eine Auflockerung von bereits in der Ausgangsfraktion vorhandenen, teilweise verbackenen Kristalliten. Falls eine Matrix zusammen mit Hartstoff-Kristalliten aufbereitet wird, kann durch die Aufbereitung je nach Anforderungen erreicht werden, dass die Kristallite an der Oberfläche mit dem Matrixmaterial belegt werden, wodurch je nach System (z.B. Hartmetall WC-Kobalt) vorteilhaftes Verhalten beim Sintern resultiert.

Grundsätzlich können in der Suspension zu der Flüssigkeit und dem Hartstoff zusätzliche Komponenten vorhanden sein, wie zum Beispiel Bindemittel, Zuschlagstoffe zur Verbesserung des Sintervorgangs und/oder Matrixkomponenten. Im Zuge der Aufbereitung z.B. durch Mahlen kann es zum Beispiel vorkommen, dass nur eine der Komponenten, zum Beispiel Matrixpartikel, eine Zerkleinerung erfährt, während z.B. die Hartstoffpartikel nur aufgelockert werden.

Weitere Vorteile und Merkmale der Erfindung ergeben sich aus den nachfolgend beschriebenen Ausführungsbeispielen sowie aus den abhängigen Ansprüchen.

Nachfolgend werden zwei bevorzugte Ausführungsbeispiele der Erfindung näher beschrieben und anhand der anliegenden Zeichnung näher erläutert.
- Fig. 1: zeigt eine Probe eines Hartstoffpulvers nach einem ersten Ausführungsbeispiel.
- Fig. 2: zeigt eine Probe eines Hartstoffpulvers nach einem zweiten Ausführungsbeispiel.

Bei einem ersten Ausführungsbeispiel der Erfindung wird ein Hartstoffpulver bereitgestellt, dass Körner aus gesinterten Kristalliten aus Wolframkarbid (bzw. Wolframmonokarbid) WC ohne zusätzliche Matrix umfasst. Hierunter wird verstanden, dass kein niedrig schmelzendes Metall oder eine Metalllegierung gezielt zugesetzt wird, die im Ergebnis als zwischen den Kristalliten angeordnetes Metall oder Legierung vorhanden ist.

Grundsätzlich können Phasen zwischen den Kristalliten vorhanden sein, die Resultat von Spurenelementen oder prozessbedingten Verunreinigungen sind. Im Sinne der Erfindung wird das aus Hartstoffkristalliten bestehende Korn daher als frei von einer Matrix bezeichnet, wenn solche Phasen einen Massenanteil von weniger als 1 %, insbesondere weniger als 0,5 %, aufweisen.

Verfahrensschritt a.: Zunächst wurden folgende Ausgangssubstanzen zu einer Suspension aufbereitet:
- 7,50 kg WC aus nanoskaligen Kristalliten, Produktname DN 3-0 der H.C. Starck GmbH
- 4,0 kg destilliertes Wasser
- 0,5 kg Bindemittel auf Basis von Polyethylenglykol.

Bei dem Produkt "DN 3-0" handelt es sich um nanoskaliges WC mit einer Kristallitgröße von 130 nm. In nachfolgender Tabelle wurden wesentliche Eigenschaften der kommerziell erhältlichen Ausgangssubstanz WC DN 3-0 gemessen:

| **Merkmal** | **Einheit** | **Messung** |
|---|---|---|
| **C_{ges.}** | % | 6,13 |
| **C_{frei}** | % | 0,09 |
| **O** | % | 0,18 |
| **Al** | ppm | 6 |
| **Ca** | ppm | 2 |
| **Co** | ppm | < 5 |
| **Cr** | ppm | 20 |
| **Fe** | ppm | 130 |
| **Na** | ppm | 9 |
| **Ni** | ppm | 9 |
| **Si** | ppm | < 10 |
| **S** | ppm | - |
| **Mo** | ppm | 160 |
| **spez. Oberfl.** | m²/g | 3,12 |

Es wird vorliegend ohne Zusatz von Dotierungszusätzen zur Unterdrückung des Kornwachstums bei der Sinterung gearbeitet. Je nach Anforderungen können solche Zusätze (Vanadiumkarbid o.ä.)= aber auch vorhanden sein.

Die Aufbereitung bzw. Homogenisierung mittels einer Kolloidmühle erfolgte über einen Zeitraum von etwa 45 Minuten.

Verfahrensschritt b.: Nachfolgend wird die Suspension zeitnah in eine handelsübliche Anlage zur Wirbelschichtgranulierung verbracht. Dabei erfolgt zunächst eine kontrollierte Verdüsung der Suspension mittels einer Zweistoffdüse unter Zuhilfenahme von Druckluft oder einem Inertgas. Die Suspension wird in Form von kleinen Tröpfchen (typisch 10 µm) in einen Raum hinein verdüst, in dem ein kontrollierter erhitzter Gasstrom von unten zugeführt wird. Die Tröpfchen und/oder Feststoffpartikel werden dadurch in Schwebe gehalten.

Verfahrensschritt c.: Die Wirbelschichtgranulierung der Tröpfchen erfolgt bevorzugt unter Verwendung von Startermaterial. Darunter werden Körner bzw. Agglomerate von Grünmaterial verstanden, die zum effektiven Start eines Batches zusammen mit dem Beginn der Verdüsung der Suspension eingebracht werden. Agglomerate eines Startermaterials haben vorliegend Durchmesser von typisch weniger als 150 µm, meist weniger als 100 µm. Hierdurch wird die Granulierung bzw. Bildung der weiteren Agglomerate zu Beginn des Batches deutlich beschleunigt.

Unabhängig von der Verwendung von Startermaterial erfolgt bei der Wirbelschichtgranulierung die Bildung von kugelförmigen Agglomeraten, indem die Flüssigkeit von den verdüsten Tröpfchen im heißen Gasstrom zumindest teilweise abtrocknet und sich die im Tröpfchen enthaltenen Kristallite irgendwann an einem im Raum schwebenden Agglomerat anlagern. Dieser Vorgang erfolgt mehrfach, bis das gebildete Agglomerat eine ausreichende Größe hat, um aus dem Gasstrom ausgetragen zu werden.

Für typische Prozessparameter haben die Agglomerate im Mittel wenigstens den dreifachen Durchmesser der Tröpfchen, so dass typisch mehr als einhundert Anlagerungsvorgänge bis zum Austrag eines Agglomerats erfolgen. Hierdurch wird eine gute Kugelform der Agglomerate erzielt, wobei der je nach System optional enthaltene Binder die Agglomerate mechanisch stabilisiert.

Die Größe und Größenstreuung der resultierenden Agglomerate kann durch die Prozessparameter beeinflusst werden. Zudem können die Agglomerate fraktioniert werden, zum Beispiel durch Sieben oder Sichten, um sie in definierte Größenfraktionen zu sortieren. Gegebenenfalls können zu kleine Körner unmittelbar in den Prozess der Wirbelschichtgranulierung zurückgeführt werden.

Typische Zielgrößen für die kugelförmigen Agglomerate liegen bei Durchmessern von einigen zehn bis einigen hundert Mikrometern, z.B. 400 µm, je nach Anforderungen.

Verfahrensschritt d: Das so erzeugte Grünmaterial aus kugelförmigen Agglomeraten von nanoskaligen WC-Kristalliten mit Bindemittel wird nachfolgend in einen Sinterofen verbracht, ohne dass die Agglomerate mechanische Deformationen erfahren oder gar zerstört werden.

Die Sinterung des Granulats bzw. der Agglomerate erfolgt aufgrund des Fehlens von Bindemetall bzw. metallener Matrix durch ein Festphasensintern. Ziel des Sinterns ist die Beseitigung einer Porosität und die Konsolidierung der Werkstoffeigenschaften, wie Festigkeit und Härte.

Die Sintertemperatur ist so zu wählen, dass der Sintervorgang im festen Zustand ausreichend schnell, aber so behutsam abläuft, dass ein Kornwachstum nicht die Eigenschaften des nanoskaligen WC wieder zunichte macht.

Ein brauchbarer Bereich zum Sintern des nanoskaligen WC ohne Matrix liegt etwa zwischen 1620 °C und 2025 °C. Eine vorteilhafte Sintertemperatur erfolgt mit 1820 °C mittels eines Sinter-HIP (Hochtemperatur-Drucksinterofen).

Das vorliegend verwendete Sinterprogramm berücksichtigt auch die Tatsache, dass noch das Bindemittel zu entfernen ist, sowie die Temperaturbereiche, in denen Reduktionsvorgänge mit CO- bzw. CO2-Entwicklung auftreten.

Zur Durchführung der Sinterung wurde ein der Laborofen des Herstellers Tisoma GmbH benutzt, der bis ca. 2200 °C betrieben werden kann. Als Gasatmosphäre wurde bis 900 °C Vakuum und darüber Ar:H2 = 80:20 benutzt. Im Vakuum sollte eine Unterstützung der Verdichtung erreicht werden, indem Reaktionsgase und evtl. eingeschlossene Luft abgesaugt werden und im höheren Temperaturbereich sollten reduzierende Bedingungen geschaffen werden. Das Sintern erfolgt auf bekannte Weise in Kohleschiffchen.

Nach der Ofenreise liegt das Hartstoffpulver als relativ lockerer Sinterkuchen vor. Bereits durch leichtes Drücken kann eine Vereinzelung erzielt werden. Die einzelnen Körner haben eine hohe Dichte von weit über 95% der theoretischen Dichte.

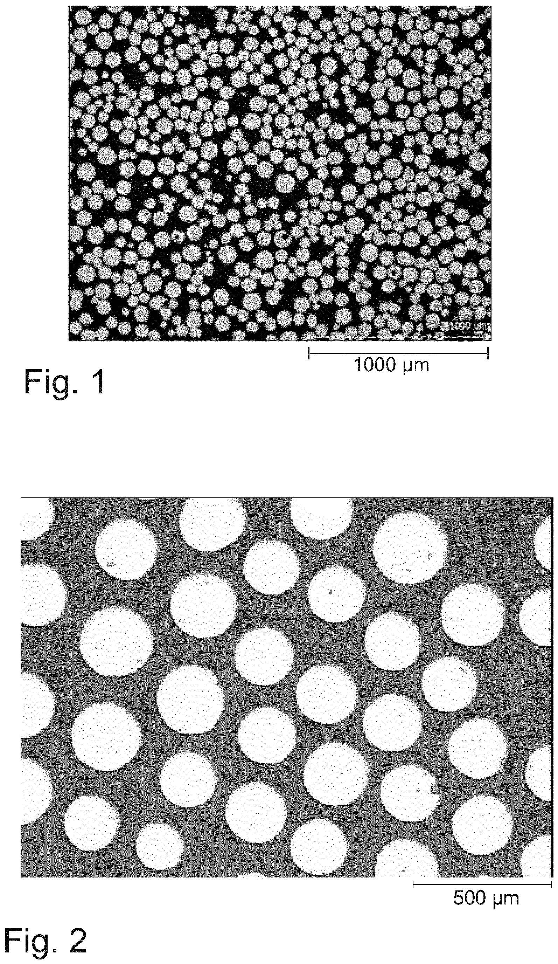

Fig. 1 zeigt eine mikroskopische Aufnahme einer abgesiebten Fraktion des Hartstoffpulvers gemäß dem ersten Ausführungsbeispiel. Erkennbar ist die gute Kugelform der gesinterten Körner.

Untersuchungen an einzelnen Körnern ergaben typische Härte von 2750 HV 0,2.

Zweites Ausführungsbeispiel: kugelförmiges WC-8Co mit nanoskaligen Kristalliten.

Bei dem zweiten Ausführungsbeispiel der Erfindung werden neben dem nanoskaligen WC des ersten Ausführungsbeispiels zudem Kobalt als Matrix und weitere Stoffe zugesetzt mit dem Ziel, dass die Körner des Hartstoffpulvers insgesamt ein Hartmetall ausbilden, wobei die Matrix sich zwischen den nanoskaligen WC-Kristalliten befindet. Die Versinterung der Hartstoffkristallite miteinander erfolgt dabei vorrangig über die Matrix als Bindemetall. Je nach Prozessparametern können auch unmittelbare Versinterungen benachbarter Kristallite miteinander vorliegen.

Die Ausgangskomponenten zur Herstellung der Suspension sind wie folgt:
- 6,800 kg WC aus nanoskaligen Kristalliten, Produktname DN 3-0 der H.C. Starck GmbH
- 0,600 kg Co-Metallpulver (Körnung 0,9 µm)
- 0,067 kg Cr3C2-Pulver (Körnung 0,9 µm)
- 0,034 kg VC-Pulver (1,1 µm)
- 0,013 kg Ruß
- 3,50 kg destilliertes Wasser
- 0,40 kg Bindemittel auf Basis von Polyethylenglykol

Das zugesetzte Kobalt in Form von feinen Partikeln stellt im fertigen Hartstoffpulver eine zwischen den WC-Kristalliten als metallischer Binder angeordnete Matrix dar. Der Massenanteil der Matrix bzw. des Kobalts liegt dann bei rund 8 %. aufgrund der geringeren Dichte des Kobalts entspricht dies einem Volumenanteil von rund 14 %.

Die in kleinen Mengen zugesetzten Komponenten Cr3C2, VC und Ruß dienen auf bekannte Weise einer Verhinderung von Kristallwachstum, einer Vermeidung von Kohlenstoffverlust während des Sinterns etc..

Die Durchführung der Verfahrensschritte a. (Suspensionszubereitung), b. (Zerteilung in Tröpfchen) und c. (schrittweises Anwachsen der Agglomerate im Raum) erfolgt vollständig analog zum ersten Ausführungsbeispiel.

Im Schritt d. des Sinterns ist allgemein zu beachten, dass die Sintertemperaturen deutlich niedriger sind als im Fall des ersten Ausführungsbeispiels. Eine maximale Temperatur liegt vorliegend im Bereich 1280 °C bis 1320 °C.

Besonders zweckmäßig erfolgt das Sintern in zwei Schritten, was allgemein für ein erfindungsgemäßes Verfahren vorgesehen werden kann:
In einem ersten Sinterschritt erfolgt eine kontrollierte Aufheizung bis zu einer ersten Temperatur, die erheblich unter einer zweiten Temperatur eines zweiten Sinterschritts liegt.

Vorliegend wurde die erste Temperatur als etwa 850 °C gewählt. Dabei erfolgt im Zuge eines zeitlich kontrollierten Aufheizens zunächst eine Verdampfung und/oder Zersetzung des Bindemittels, was regelmäßig bereits unterhalb von 400 °C abgeschlossen wird.

Nach dem thermischen Entfernen des Bindemittels wird im Bereich von 850 °C zunächst ein Anbacken der Kristallite und/oder der Matrixkörner erzielt, wobei noch Hohlräume vorhanden sind, aber bereits eine gewisse mechanische Festigkeit erzielt wird, die in der Größenordnung der zuvor durch das Bindemittel erzielten Festigkeit liegt.

Nachfolgend wird das so entstandene Zwischenmaterial abgekühlt und bevorzugt erneut aufgelockert, wobei wiederum die mechanische Belastung so gering ist, dass die Agglomerate nicht zerstört oder deformiert werden.

Hiernach wird der zweite Sinterschritt durchgeführt, bei dem die Aufheizung bis zu der zweiten Temperatur, im vorliegenden Beispiel etwa 1300 °C, erfolgt. Dies führt zu einem teilweisen Aufschmelzen zumindest der Matrix und zu einer Umgruppierung der Kristallite, so dass im Ergebnis eine hohe Dichte des Materials ohne verbleibende Hohlräume resultiert.

Fig. 2 zeigt ein Bild einer gesiebten Fraktion des resultierenden Hartstoffpulvers. Die sehr gute Kugelform bei einer überwiegenden Mehrzahl der Körner ist offensichtlich. Messungen an einzelnen Körnern haben eine Härte im Bereich 2480...2590 HV 0,3 sowie 1945 HV 30 ergeben. Die Koerzitivfeldstärke wurde zu 40,6 kA/m bestimmt.

## Patentansprüche

1. Verfahren zur Herstellung eines Hartstoffpulvers, umfassend die Schritte:
a. Aufbereiten eines Wolframkarbids, insbesondere WC, zu einer Suspension aus Kristalliten in einer Flüssigkeit;
b. Zerteilen der Suspension in Tröpfchen in einem Raum;
c. Trocknen der Flüssigkeit der Tröpfchen und Bildung von Agglomeraten der Kristallite,
wobei Schritt c. eine Wirbelschichtgranulierung des Hartstoffs umfasst;
d. Sintern der Agglomerate zu Körnern, die im Wesentlichen die Form der Agglomerate aufweisen,
wobei die mittlere Sehnenlänge der miteinander versinterten Kristallite maximal 1 µm, insbesondere maximal 0,5 µm, insbesondere nicht mehr als 0,2 µm, beträgt;
umfassend den Schritt:
Kontrolliertes, mehrfaches Anlagern eines oder mehrerer Kristallite aus einem ersten Tröpfchen an ein Agglomerat, wobei insbesondere ein mittlerer Durchmesser der gesinterten Agglomerate größer ist, insbesondere wenigstens dreimal größer ist, als ein mittlerer Durchmesser der Tröpfchen.

2. Verfahren nach Anspruch 1, **dadurch gekennzeichnet, dass** die Agglomerate im Wesentlichen kugelförmig sind, wobei insbesondere ein Verhältnis eines maximalen Durchmessers des Agglomerats zu einem minimalen Durchmesser des Agglomerats nicht mehr als 1,5, insbesondere nicht mehr als 1,2, beträgt.

3. Verfahren nach einem der Ansprüche 1 bis 2, **dadurch gekennzeichnet, dass** die Suspension einen Binder enthält, insbesondere einen Binder auf organischer Basis, insbesondere in einem Massenanteil von nicht mehr als etwa 10%.

4. Verfahren nach einem der Ansprüche 1 bis 3, **dadurch gekennzeichnet, dass** die Flüssigkeit der Suspension Wasser, insbesondere entgastes Wasser, ist.

5. Verfahren nach einem der Ansprüche 1 bis 4, **dadurch gekennzeichnet, dass** Schritt a. ein Mahlen einer Ausgangsfraktion des Hartstoffes umfasst, insbesondere ein Mahlen in einer Kolloidmühle.

## Claims

1. Method for the production of a hard material powder, comprising the steps:
a. Processing of a tungsten carbide, in particular WC, into a suspension of crystallites and a liquid;
b. fragmenting the suspension into droplets in a compartment;
c. drying of the liquid of the droplets and forming of agglomerates of the crystallites;
wherein step c. comprises a fluidized bed granulation of the hard material;
d. sintering of the agglomerates to grains, the grains essentially comprising the shape of the agglomerates;
wherein the median chord length of the mutually sintered crystallites has a maximum of 1 µm, in particular a maximum of 0,5 µm, in particular not more than 0,2 µm;
comprising the step of:
controlled, multiple attachment of one or multiple crystallites from a first droplet to an agglomerate, wherein in particular a median diameter of the sintered agglomerates is greater than, in particular at least three times greater than, a median diameter of the droplets.

2. Method according to claim 1, **characterized in that** the agglomerates are essentially ball-shaped, wherein in particular a ratio of a maximum diameter of the agglomerate to a minimum diameter of the agglomerate is not greater than 1,5, in particular not greater than 1,2.

3. Method according to one of claims 1 or 2, **characterized in that** the suspension contains a binder, in particular an organic-based binder, in particular having a mass fraction of not more than 10%.

4. Method according to one of claims 1 to 3, **characterized in that** the liquid of the suspension is water, in particular degassed water.

5. Method according to one of claims 1 to 4, **characterized in that** step a. comprises a grinding of an initial fraction of the hard material, in particular a grinding in a colloid mill.

## Revendications

1. Procédé de fabrication d'une poudre de substance dure, comprenant les étapes :
a. le traitement d'un carbure de tungstène, en particulier WC, pour obtenir une suspension de cristallites dans un liquide ;
b. la répartition de la suspension sous forme de gouttelettes dans une pièce ;
c. le séchage des gouttelettes de liquide et la formation d'agglomérats de cristallites, dans lequel l'étape c. comprend une granulation en lit fluidisé de substance dure,
d. le frittage des agglomérats en grains, qui se présentent essentiellement sous la forme d'agglomérats,
dans lequel la longueur moyenne de la corde des cristallites frittés est au maximum de 1 µm, en particulier au maximum de 0,5 µm, plus particulièrement pas plus de 0,2 µm ;
comprenant l'étape consistant à déposer en plusieurs fois de manière contrôlée un ou plusieurs cristallites à partir d'une première gouttelette sur un agglomérat, en particulier un diamètre moyen des agglomérats frittés étant plus grand, plus particulièrement au moins trois fois plus grand que le diamètre moyen des gouttelettes.

2. Procédé selon la revendication 1, **caractérisé en ce que** les agglomérats sont sensiblement sphériques, et plus particulièrement un rapport d'un diamètre maximal de l'agglomérat sur un diamètre minimal de l'agglomérat n'est pas supérieur à 1,5, plus particulièrement pas supérieur à 1,2.

3. Procédé selon l'une des revendications 1 à 2, **caractérisé en ce que** la suspension comprend un liant, plus particulièrement un liant à base organique, plus particulièrement dans une fraction massique non supérieure à environ 10%.

4. Procédé selon l'une des revendications 1 à 3, **caractérisé en ce que** le liquide est une suspension d'eau, plus particulièrement de l'eau dégazée.

5. Procédé selon l'une des revendications 1 à 4, **caractérisé en ce que** l'étape a. comprend un broyage d'une fraction de base de substance dure, plus particulièrement un broyage dans un moulin colloïdal.
